(19) Europäisches Patentamt
European Patent Office
Office européen des brevets

(11) **EP 2 731 383 A1**

(12) **EUROPEAN PATENT APPLICATION**

(43) Date of publication:
**14.05.2014 Bulletin 2014/20**

(51) Int Cl.:
***H04W 52/02*** *(2009.01)*    ***H04W 84/04*** *(2009.01)*

(21) Application number: **12191577.1**

(22) Date of filing: **07.11.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **NTT DoCoMo, Inc.**
**Chiyoda-ku**
**Tokyo 100-6150 (JP)**

(72) Inventors:
• **Ternon, Emmanuel**
**80639 München (DE)**

• **Hu, Liang**
**80339 München (DE)**
• **Taoka, Hidekazu**
**81669 München (DE)**

(74) Representative: **Zinkler, Franz**
**Patentanwälte Schoppe, Zimmermann, Stöckeler**
**Zinkler & Partner**
**Postfach 246**
**82043 Pullach bei München (DE)**

(54) **Apparatus and method for controlling a plurality of micro base stations, base station and method of operating a base station, mobile station and method of operating a mobile station**

(57)     An apparatus for controlling a plurality of micro base stations each having a micro base station radio coverage area in a heterogeneous network comprising a macro base station having a macro base station radio coverage area covering at least two micro base station radio coverage areas, comprises a database (10) for storing, for each micro base station, a plurality of geographic locations and associated therewith radio channel information entries for a radio channel from the corresponding geographic location to the corresponding micro base station, and a micro base station controller (12) for receiving a geographic location of a mobile station, for accessing the database, for identifying a micro base station having a radio channel allowing a communication between the identified micro base station and the mobile station based on the radio channel information for the received geographic location, and for sending a message to the identified micro base station instructing the identified micro base station to serve the mobile station.

FIGURE 1

EP 2 731 383 A1

## Description

The present invention relates to communication technology and particularly to mobile communication technology, where base stations are used, which can be either in a sleep mode or in an active mode.

Heterogeneous Networks are an important topic of research for Future Radio Access Networks in Wireless Communications. The latest trend in this area is the separation of Control Signals and User Data Signals on two distinct overlaid networks, the so called C/U-plane separated Networks. Additionally, Energy Savings and Energy Efficiency are also very popular trends in Wireless Networks.

One of the major issues with putting small cells in such a network to sleep is that these cells do not transmit any signal, and hence cannot be discoverable by Mobile Stations (MSs) if not aided by a third party. Furthermore, since it is impossible to measure the channel between sleeping cells and MSs due to the absence of pilot symbols, the most appropriate small cell cannot be determined.

Since Energy Efficiency in Wireless Networks is a very popular topic nowadays, several publications exist.

- The European Project EARTH introduces the concept of C/U-plane separation, as well as the principle of putting unused BSs in sleep mode in its deliverables D3.3, published in July 2012 [1].

- A recently published application (August 2012) [2] proposes a Base Station Wake-up Control System in Heterogeneous Networks, based on interference levels and pathloss measurements.

- Research on sleep modes for BSs has been performed by a number of authors, e.g.:

   o P. Frenger et al. [3], who propose a "Discontinuous Transmission" (DTX) scheme, equivalent to various levels of base station sleep modes, depending on the number of elements which are switched off in the base station.

   o Conte et al. [4], who introduce the concept of "Cell Wilting and Blossoming", giving a method to gradually put BSs to sleep by reducing their radii and increase the radii of neighboring cells.

   o Adhikari et al. [5], who recently published a paper describing a method to switch off a base station when the traffic in neighboring cells can handle this base station's traffic.

Further related technologies are described in EP 2432284 A1, EP 2056628 A1, and EP 2141947 A1.
US 2012/0100881 A1 discloses a method for operating a mobile station in the sleep mode state in the wireless communication system. The method includes transmitting a request message to a base station to inquire a location of next scheduled listening window responsive to failing to receive a address traffic indication message and unicast data during a listening window, receiving a response message unicast in response to the request message, performing sleep cycle synchronization by using synchronization information included in the response message, and determining whether an emergency alert service-related message is transmitted by using emergency alert service information included in the response message.

The prior art publication "Evaluation of the potential for energy saving in macrocell and femtocell networks using a heuristic introducing sleep modes in base stations", Vereecken et al., EURASIP Journal on Wireless Communications and Networking 2012, 170, discusses the issue that mobile access networks require optimization and energy consumption and that data volumes and required bitrates are rapidly increasing. The heuristic is illustrated, which allows establishing a baseline of active base station fractions in order to evaluate mobile access network designs. Sleep modes can lead to significant improvements in energy efficiency and act as an enabler for femtocell deployments.

Basically, disadvantages of known procedures are that energy savings on the one hand and an efficient network topology with a high transmission throughput on the other hand are difficult to achieve.

Therefore, it is an object of the present invention to provide an improved concept for a mobile communication network.

This object is achieved by an apparatus for controlling a plurality of micro base stations in accordance with claim 1, a method of controlling a plurality of micro base stations in accordance with claim 8, a base station in accordance with claim 9, a method of operating a base station in accordance with claim 11, a mobile station in accordance with claim 12, a method of operating a mobile station in accordance with claim 14 or a computer program in accordance with claim 15.

Embodiments of the present invention obtain an improved and energy-efficient concept with the help of a database within an apparatus for controlling a plurality of micro base stations, where this database stores, for each micro base station, a plurality of geographic locations and associated therewith radio channel information entries for a radio channel from the corresponding geographic location to the corresponding micro base station.

Based on this database, a micro base station controller can access this database using a current geographic location of a mobile station. Then, the micro base station accesses this database for identifying a micro base station having a radio channel allowing a communication between the identified micro base station and the mobile station and then the micro base station controller sends out a message to the identified micro base station instructing the identified micro base station to serve this mobile station. This message may comprise a wake-up message, when the identified micro base station is in the sleep mode or can comprise a serving instruction, when the micro base station is already in the active mode or wake-up mode so that the micro base station is ready to serve the mobile station from now on.

A further aspect of the present invention relates to a base station receiving a geographic location and associated radio channel information from an associated or served mobile station. The base station then adds its own base station ID to this data set consisting of geographic location and radio channel information and forwards this information preferably via a backhaul network to a separate apparatus for controlling a plurality of micro base stations so that this apparatus builds up or updates the database with respect to the current base station.

Furthermore, the base station is configured to not send out pilot tones when the base station is in the sleep mode and to send out pilot tones when the base station is not in the sleep mode. Further power saving operations can also be applied, such as by switching off the output power amplifier in the sleep mode, while in the active mode the power amplifier is on. While not sending pilot tones already provides energy savings, these energy savings can be enhanced by additionally shutting off the power amplifier or other transmission-related elements. Such elements may comprise, additionally, a local oscillator for upmixing a baseband signal and a corresponding upmixer element which may, for example, comprise an active element such as a diode.

Further sleep mode switching-off operations may relate to base band processors connected to a wireless communication interface of the base station so that only a receiving front-end which is connected to a date connection between the apparatus for controlling the plurality of micro base stations and the current base station is active in order to be in the position to receive the instruction for serving a mobile station which can be, in one instance, just a wake-up message, or which can be an instruction to the micro base station actually serving a certain mobile station. Therefore, the message may also a message instructing the identified micro base station to be ready for serving the mobile station, so that an actual connection can take place between the mobile station and the base station which is either controlled or initiated by the base station or is controlled or initiated by the mobile station depending on the current communication protocol.

A preferred implementation of the mobile station comprises a mobile station controller configured for performing a detached cell mode activation procedure comprising listening to pilot tones of a micro base station, transmitting a message to a macro base station indicating that a connection to a micro base station has failed, when pilot tones of a micro base station are not heard. Furthermore, the detailed cell mode activation procedure comprises again listening to pilot tones of a further micro base station subsequent to transmitting the message and starting an initial communication procedure with the further micro base station if the mobile station can be served by the further micro base station, or initiating a connection through the macro base station, when a predetermined number of tries to connect to a further micro base station has failed.

Preferred embodiments of the present invention relate to a system concept allowing small cells in, for example, a C/U plane separated network to be put to sleep when not in use, so as to save energy, and to turn them back on when needed.

In an embodiment, a database that is accessible either directly or indirectly by any mobile station at any time and any location is provided, while this database contains some channel quality information for every cell such as a small cell, and where this channel quality information is mapped with geographical location coordinates, so that it is possible to determine which small cell is the most appropriate to connect to at any geographical point in the network's coverage area. Hence, a database is implemented preferably at each macro or C-plane base station that stores some data that help determine which is the most appropriate U-plane base station to connect to irrespective of whether the micro base station is in the on state or in the sleep state, and this determination is only made based on the mobile stations reported geographic location information.

Preferred embodiments of the present invention address the problem of U-plane cell discovery and solutions regarding this topic.

Furthermore, preferred embodiments provide a central storage and processing of the measured data which preferably takes place within an apparatus for controlling a plurality of micro base stations and this apparatus is preferably implemented in a macro base station or C-plane base station.

Therefore, these embodiments relate to a central storage and processing of the measured data rather than to any actions and operations or decisions taken by neighboring cells.

Furthermore, the database holds geographic location information from mobile stations and this geographical position reported from a mobile station to the database either directly or indirectly via a macro base station or even a micro base station is used for switching on or off the base station.

In embodiments of the present invention, a centralized approach is used, and a C/U-plane separated architecture is used together with a database on the one hand and geographical information of mobile stations on the other hand.

The database-aided solution of embodiments enables to overcome the U-plane base station discovery issue at low computational cost and low memory consumption.

- Leaving unused U-plane BSs in SLEEP mode will enable to reduce the energy consumption of the network and hence to reduce operating costs.

- Through the algorithm, the energy consumption is inherently minimized since U-plane BSs are woken up only when MSs cannot be served.

- Additional features, such as load balancing techniques can be implemented to offer some additional optimization.

- The capacity of the system is not impacted. U-plane BSs are left in SLEEP mode only when the system is sure not to need them. In case of full system utilization, the Detached Cell Concept behaves just like a standard Phantom Cell Concept System.

Furthermore, this invention can enable the operator to reduce the overall consumed power of the system.

Preferred embodiments of the present invention are subsequently described with respect to the accompanying drawings, in which:

Fig. 1 is an embodiments of an apparatus for controlling a plurality of micro base stations;

Fig. 2 illustrates an embodiment of a base station;

Fig. 3 illustrates an embodiment of a mobile station;

Fig. 4 illustrates an embodiment of a method of controlling a plurality of micro base stations;

Fig. 5a, 5c illustrate an embodiment of a method of operating a base station;

Fig. 6a, 6b illustrate an embodiment of a method of operating a mobile station;

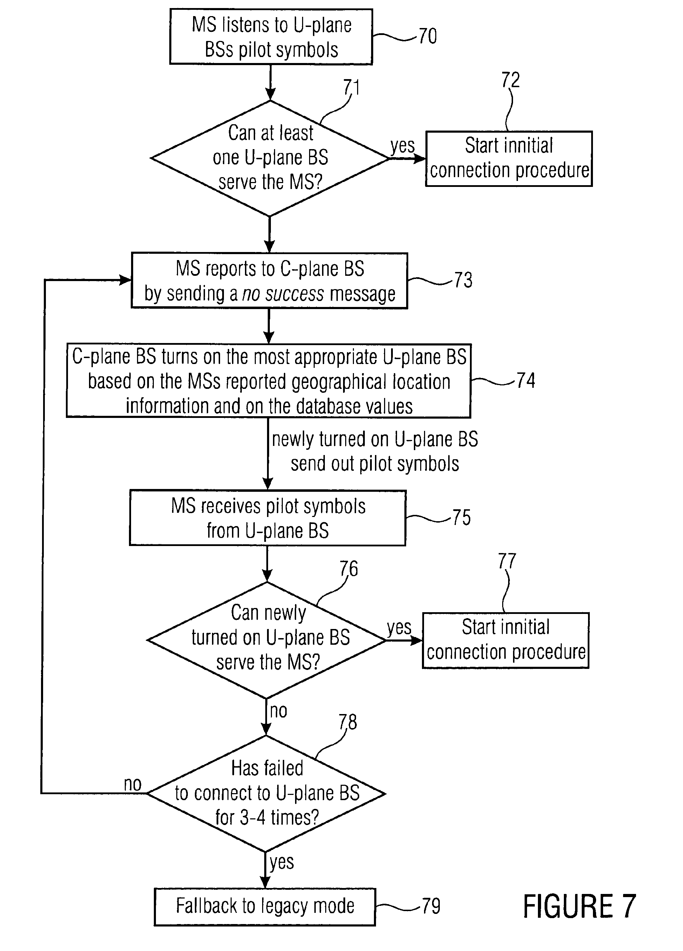

Fig. 7 illustrates an overview over the detached cell mode activation procedure comprising operations performed by the mobile station, the apparatus for controlling a plurality of micro base stations and a micro base station;

Fig. 8 illustrates a database structure and an updating procedure in an embodiment;

Fig. 9 illustrates a general structure of the detached cell concept (DCC);

Fig. 10 illustrates a diagram showing the functions of the DCC;

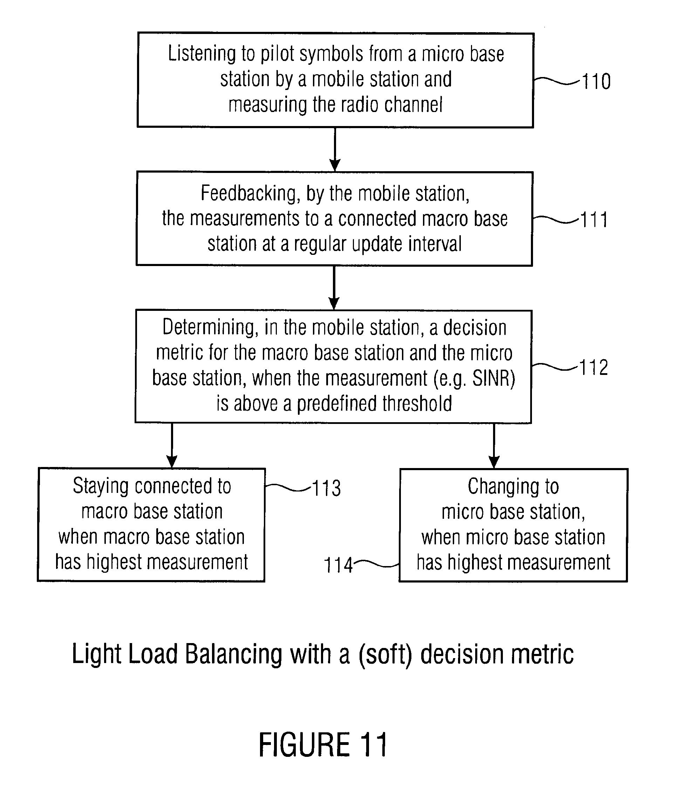

Fig. 11 illustrates an implementation of the light load balancing algorithm;

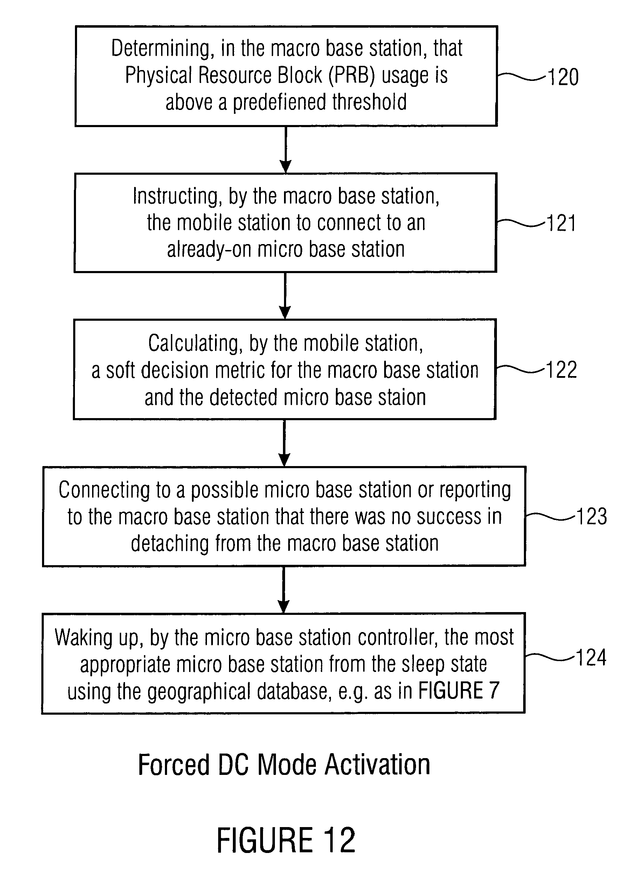

Fig. 12 illustrates an embodiment of the forced DC mode activation procedure; and

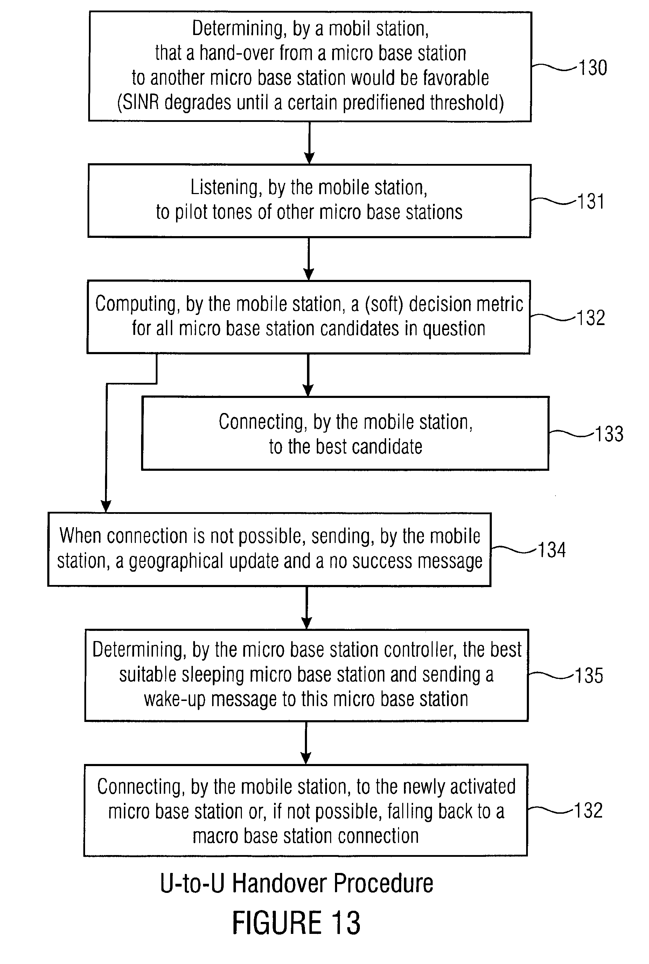

Fig. 13 illustrates a handover procedure between two base stations.

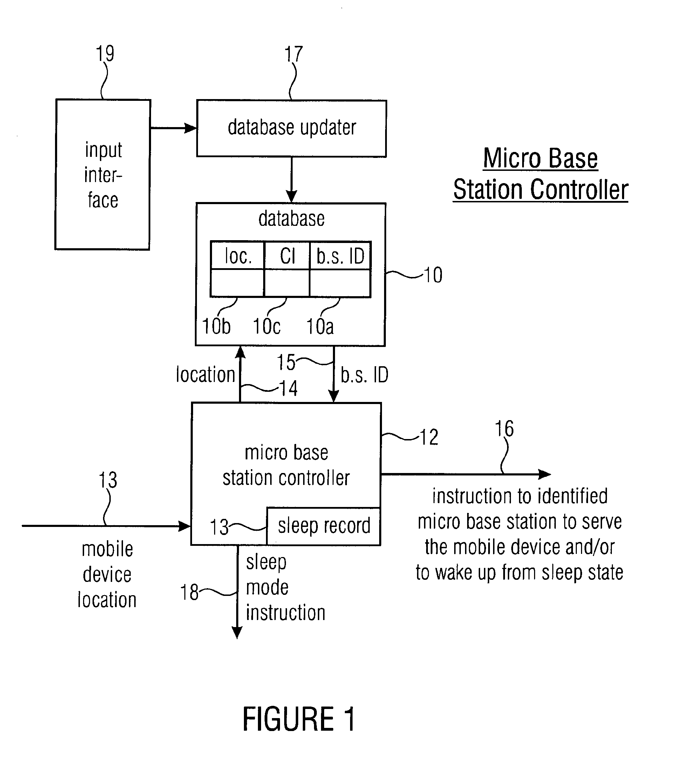

Fig. 1 illustrates an apparatus for controlling a plurality of micro base stations, where each micro bases station has a micro base station radio coverage area in a heterogeneous network comprising a macro base station having a macro base station radio coverage area covering at least two micro base station coverage areas. The apparatus comprises a database 10 for storing, for each micro base station identified by the micro base station ID 10a a plurality of geographic locations illustrated at 10b and associated therewith radio channel information and is indicated at 10c for a radio channel from the corresponding geographic location indicated in column 10b to the corresponding micro base station indicated by column 10a.

The apparatus also comprises a micro base station controller 12 for receiving a geographic location at an input 13, for accessing the database using this location via output 14 and for identifying a micro base station having a radio channel allowing a communication between the identified micro base station and the mobile station based on the radio channel information for the received geographic location, where this micro base station ID is delivered via input 15. Furthermore, the micro base station controller 12 is configured for sending out a message to the identified micro base station instructing the identified micro base station to be ready for serving the mobile station. In an embodiment, this instruction transmitted via output 16 is just a wake-up message to the identified micro base station when the micro base station is in the sleep mode or is an instruction to actually connect to a certain mobile station, when the micro base station is, for example, already in the active mode. Irrespective of whether a mobile station sets up the connection to the micro base station or the micro base station sets up the connection to the mobile station, the instruction 16 from the micro base station controller makes sure that the addressed micro base station identified by the micro base station ID received via input 15 is ready for serving the mobile station, which is at or close to the mobile device location received by the micro base station controller via input 13.

The apparatus comprises an input interface 19 for receiving, from each of the plurality of micro base stations, a traffic load information or for receiving, from a mobile station, a micro base station identification of the micro base station currently communicating with the mobile station and radio channel information between the mobile station and the micro base station in association with geographic information relating to a location of this mobile station.

The apparatus comprises a database updater 17 for newly introducing the micro base station identification received via the input interface 19, the radio channel information and the geographic position into the database when there are no entries for a certain micro base station or for updating a stored radio channel information in the database provided that the database already has stored radio channel information for the geographic position and the micro base station identification received via the input interface 19.

The micro base station controller 12 is configured for detecting whether any mobile station is currently in the macro base station radio coverage area. When there are no mobile stations in the macro base station radio coverage area, the micro base station controller is configured for sending out sleep mode instruction via output 18 for instructing all or a subset of the micro base stations being in the coverage area of the macro base station to go into the sleep mode.

To this end, the micro base station controller 12 is configured for storing a corresponding sleep record 13 of micro base stations which are already in sleep mode. The micro base station controller 12 is configured to only send the message to the micro base station in the sleep mode as determined by the sleep record, when a resource block usage of the macro base station reaches a usage threshold, or when a measured channel quality of a currently active micro base station starts to degrade by a predefined amount, or when the micro base station controller 12 receives a message from a mobile station indicating that the mobile station was not successful in connecting to a micro base station currently not in the sleep state.

The micro base station controller can be configured for performing a load balancing algorithm using a decision metric. The decision metric is based on a radio channel information stored in the database for the micro base station under consideration and a number of currently unused resource blocks. Alternatively or additionally, the metric is determined by the mobile station itself and depends on the radio channel information actually measured by the mobile station itself.

In a further embodiment of the present invention, the micro base station controller 12 is configured for detecting a newly installed micro base station in the macro base station radio coverage area, and the micro base station controller is configured for not instructing the newly installed micro base station to go into the sleep mode until a predetermined number of radio channel information samples associated with geographic information for mobile stations communicating with the newly installed micro base stations have been received by the apparatus for controlling the plurality of micro base stations.

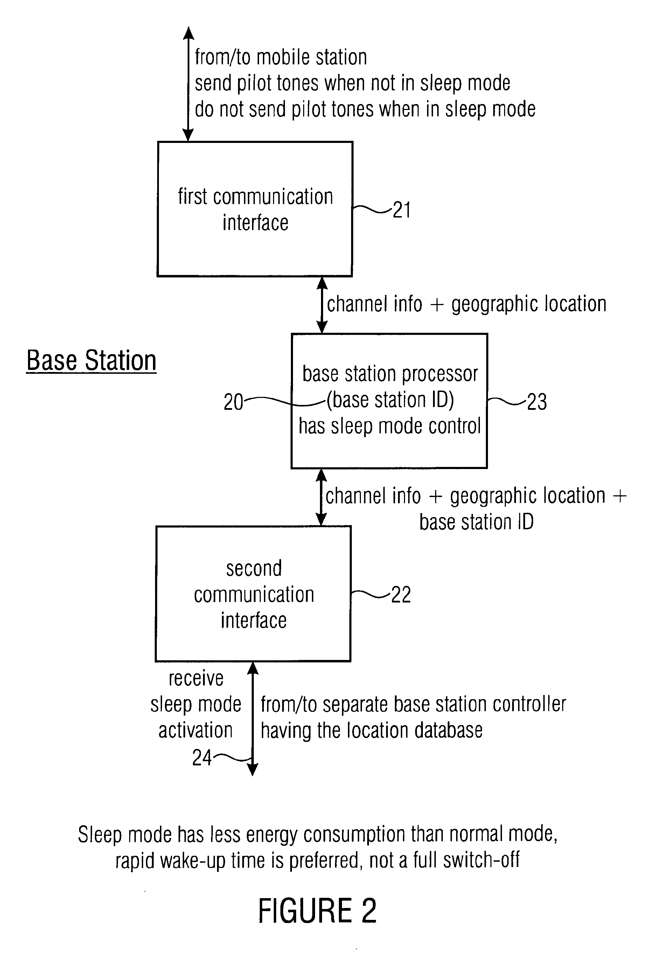

Fig. 2 relates to an embodiment of the base station such as a micro base station, but the base station itself can also be a macro base station or any base station which can be set into a sleep mode.

The base station comprises a first communication interface 21 for communicating with a mobile station and a second communication interface 22 for communicating with a separate base station controller.

Furthermore, the base station comprises a base station processor 23 having a base station ID. The base station processor 23, therefore, has stored an identification of the base station under consideration in Fig. 2 and this ID will be different for at least each base station within a macro base station radio coverage area.

The base station processor 23 is configured for transmitting, using the second communication interface, radio channel information items and associated geographic locations received from a mobile station communicating with the first communication interface 22, and for this communication to the separate base station mode controller, the second communication interface 22 is used.

Furthermore, the base station processor 23 is configured to associate the own base station ID illustrated at 20 to the radio channel information items and the associated geographic locations before transmitting the radio channel information items.

Furthermore, the base station processor 23 is configured for receiving, using the second communication interface 22, a sleep mode activation instruction via input 24, and the base station processor 23 is configured to control the first communication interface 21 at least so that no pilot tones are transmitted by the base station when the base station is in the sleep mode and that pilot tones are sent when the base station is not in the sleep mode.

Preferably, the first communication interface 21 is a radio channel communication interface, and the second communication interface 22 is an interface to a backhaul connection to a macro base station, and this backhaul connection is preferably a wired connection, but also can be any kind of connection such as even a wireless connection.

The sleep mode is different from the novel mode or active mode or wake-up mode in that the sleep mode incurs less energy consumption than the normal state. Preferably, a rapid wake-up time below one second and even below 0.5 seconds is preferred so that a full switch-off of the base station is not preferred.

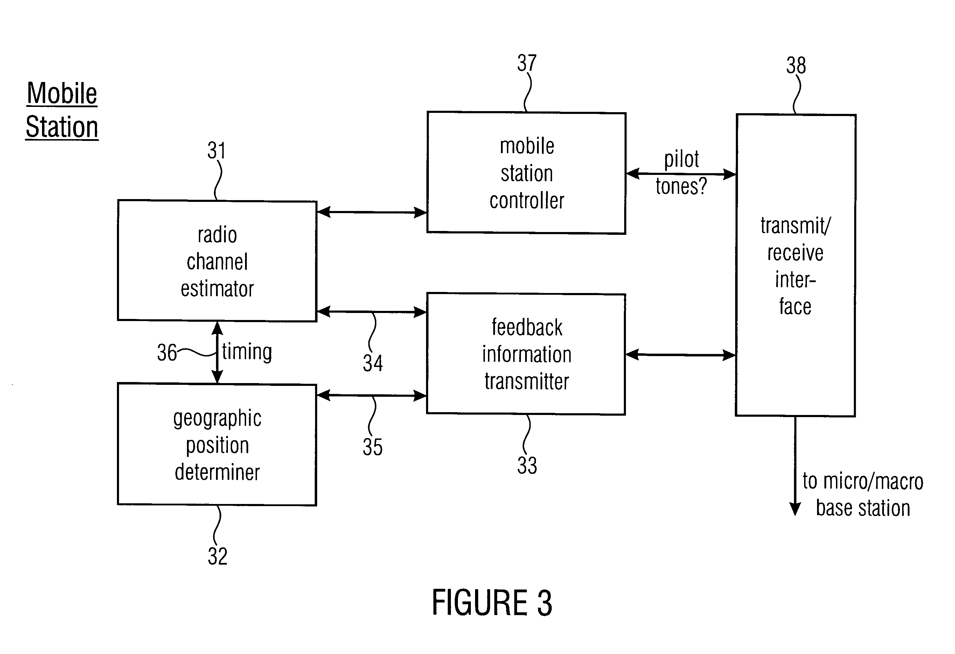

Fig. 3 illustrates an implementation of a mobile station for communicating with the base station. The mobile station comprises a radio channel estimator 31 for estimating a channel between the mobile station and a serving base station. The mobile station also comprises a geographic location determiner 32 for determining a current position of the mobile station and the mobile station additionally comprises a feedback information transmitter 33 for transmitting the feedback message to a base station, the feedback message having, on the one hand, an information on the estimated channel as received via input 33 and a geographic position as received via input 35, and, particularly, it is necessary that the radio channel information on the one hand and the geographical position on the other hand match, i.e. that the radio channel has been estimated at the geographic position determined by block 32. In order to insure this, a certain timing to be illustrated continually by the connection 36 is preferred.

The mobile station comprises a mobile station controller 37 connected to a transmit/receive interface 38 which is in the position to communicate to a micro/macro base station via a wireless communication channel.

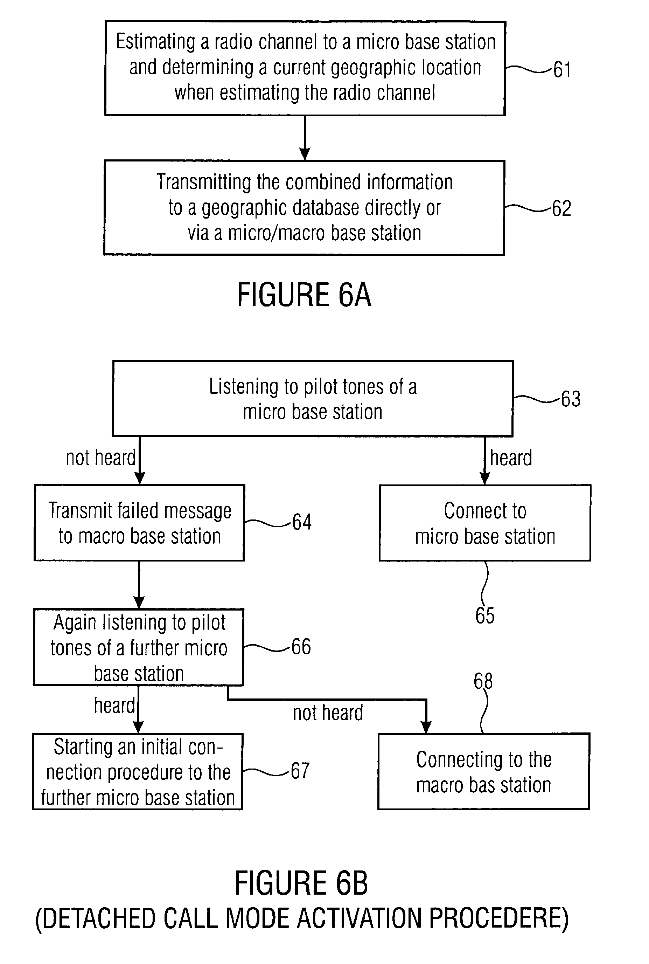

The mobile station controller 37 is configured for performing a detached cell mode activation procedure illustrated exemplarily in Fig. 6b. Particularly, a first step of the detached cell mode activation procedure is illustrated in 63, i.e., the mobile station listens to pilot tones of a micro based station.

When pilots tones of the micro base station are not heard, control proceeds to step 64. Then, the mobile station transmits a message to a macro base station indicating that the connection to a micro base station has failed. When, however, step 63 results in a hearing of pilot tones, the mobile station sets up a connection procedure to the micro base station with the pilot tones heard, as illustrated in step 65.

Subsequent to step 64, a further step 66 of listening to pilot tones of a further micro base station is performed.

When the mobile station can be served by the further micro base station, i.e., when pilot tones of the further micro base station are heard, then the mobile station starts an initial connection procedure to this further micro base station as indicated at step 67. When, however, the pilot tones are not heard, and when a predetermined number of drives have failed within step 66, then step 68 is performed, i.e., that the mobile station connects to the macro base station.

Regarding Fig. 6a, it is noted that step 61, i.e., the estimating radio channel to a micro base station and the determination of a current geographic location when estimating the radio channel are actually performed by blocks 31, 32 of Fig. 3 and the step of transmitting 62 of the combined information to a geographic database directly or via a micro or macro base station is performed by block 33 together with the transmit/receive interface 38 of the mobile station.

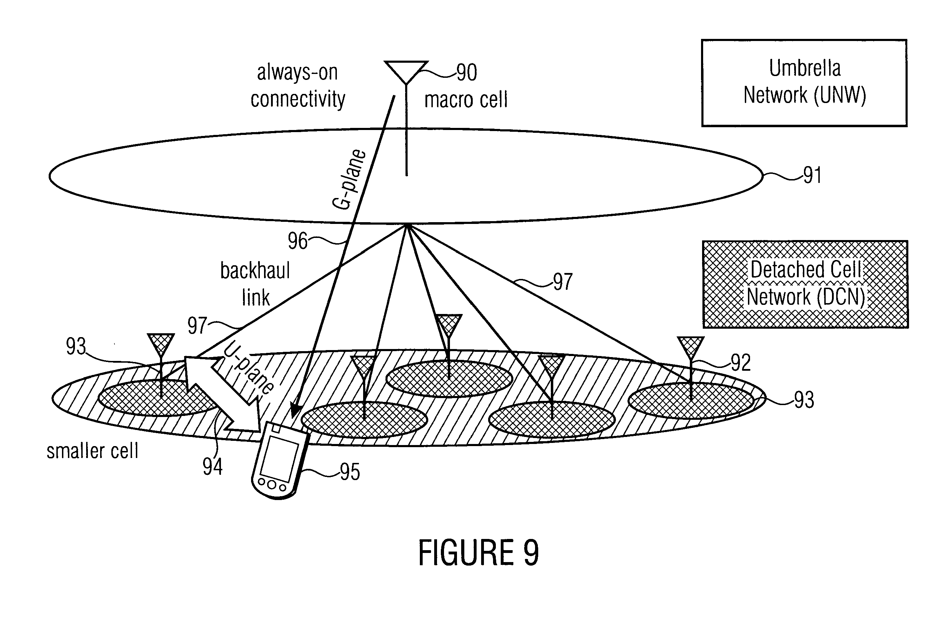

Fig. 9 illustrates an overview of the detached cell concept (DCC). The detached cell concept is the target configuration of embodiments of the present invention. However, the embodiments of the present invention can also be used in the context of other network architectures where macro base stations and micro base stations exist.

The detached cell concept comprises two overlaid networks.

- The Umbrella Network (UNW), comprised of several Control Plane Base Stations (C-plane BSs), which can be Macro or Micro. These cells operate in currently existing frequency bands (e.g., 2 GHz), using currently standardized systems (e.g. LTE/LTE-A) and guarantee backwards compatibility for legacy Mobile Stations (MSs), i.e. MSs which just support current standards.

- The Detached Cell Network (DCN), comprised of several User Data Plane Base Station (U-plane BSs), small cells operating in different (higher) frequency bands (e.g. 3.5GHz), not yet licensed as of 2012. These small cells are connected to the UWN through a backhaul link and can be put to sleep when not in use.

Mobile Stations (MSs) connected to the network use one of these two operating modes:

- Legacy mode: in this mode, the UNW takes care of the transmission of both Control signals and User Data signals (C+U transmission). This mode is used either to support legacy MSs, or to support a low number of newer MSs with lower data rate requirements or with very high mobility. The DCN is therefore not used when using this mode.

- Detached Cell (DC) mode: in this mode, the UNW is responsible for C-Plane communication and the DCN for U-Plane communication. U-plane BSs are switched on only when necessary. Legacy-MSs do not support this mode, and therefore connect to the Network only via legacy mode.

The choice of one operation mode or another is determined by many factors, one of them being the mobility of BSs:

- For low-mobility MSs: When the channel quality and available resources of the C-plane base station meet the Quality of Service requirements of the MSs, they keep connecting to the network in legacy mode. MSs only connect in DC mode when these requirements are not met or when some load balancing features are implemented.

- For high-mobility MSs: MSs are forced to remain in legacy mode. The main reason for this is to avoid non-stop handovers from small cell to small cell. The mobility (i.e. speed of the mobile station) can be estimated by the reported geographical location information, the Doppler frequency shift or by other means.

A U-plane base station can be in two different states:

- The ON state, in which the U-plane base station is fully on and sends both user data to connected MSs, as well as pilot symbols to enable new MSs to connect. Pilot symbols sent by the U-plane BSs enable the users to differentiate each U-plane base station and to measure the channel quality between them and the U-plane BSs.

- The SLEEP state, in which the U-plane base station is in a kind of stand-by mode where it can neither send nor receive any signal, but where it can be woken up by the C-plane base station almost instantly through the backhaul link. The major difference between this state and a complete "OFF" state where BSs are entirely shut down is that the U-plane base station can be woken up and operational again in a very short time (ca. 1 ms). Leaving BSs in this state therefore does not impact the dynamic aspect of the system (e.g. during handovers), but results in a non-negligible energy consumption since some parts of the base station's circuitry are left on.

Fig. 9 illustrates such a heterogeneous network, where this network comprises the macro base station indicated at 90 having a macro base station coverage area 91 and, additionally, five micro base stations 92 are illustrated where each micro base station has an own micro base station coverage area 93. It can be seen from Fig. 9 that the macro base station radio coverage area 91 covers at least two micro base station radio coverage areas 93 and, particularly, in the embodiment of Fig. 9, five such micro base station radio coverage areas.

It is preferred that the control signals and the user data signals are separated in two distinct overlaid networks (C/U separated networks), and the base stations 92 responsible for user data signals (U-plane base stations) are set to sleep when they are not needed.

Naturally, putting these small cells to sleep creates an issue regarding their discovery, since these small cells stop transmitting pilot symbols in the sleep mode. In order to address this issue, the present invention relies on the database 10 illustrated in Fig. 1 that helps any mobile station to connect to the corresponding micro base station both on and in the sleep mode based on the mobile station reported geographic location information.

The U-plane is illustrated at 94 and connects a mobile station 95 to a micro base station 93 and, additionally, the mobile station 95 can have a C-plane connection to the macro base station 90 via the C-plane 96 where, additionally, each micro base station 92, 93 may comprise a separate backhaul link 97 to the macro base station 90.

Preferred embodiments of the present invention refer to different aspects. One aspect is that the database is used for helping any mobile station to choose the most appropriate U-plane base station only based on the mobile station's reported geographic location information.

A further feature of the invention is that this database is stored in the macro base station and the content into the database is collected within the regular service of the cellular network and the content of the database is furthermore updated during the regular service of the cellular network.

A further feature is that certain criteria to initially switch from on to sleep of a micro base station are applied.

Furthermore, it is preferred to use certain criteria for a mobile station so that the mobile station reports the geographic location information to the database/macro base station.

A further feature of embodiments relates to the procedure for waking up the appropriate sleeping micro base station and for connecting it to a mobile station, i.e., the transition from the sleep state to the on state.

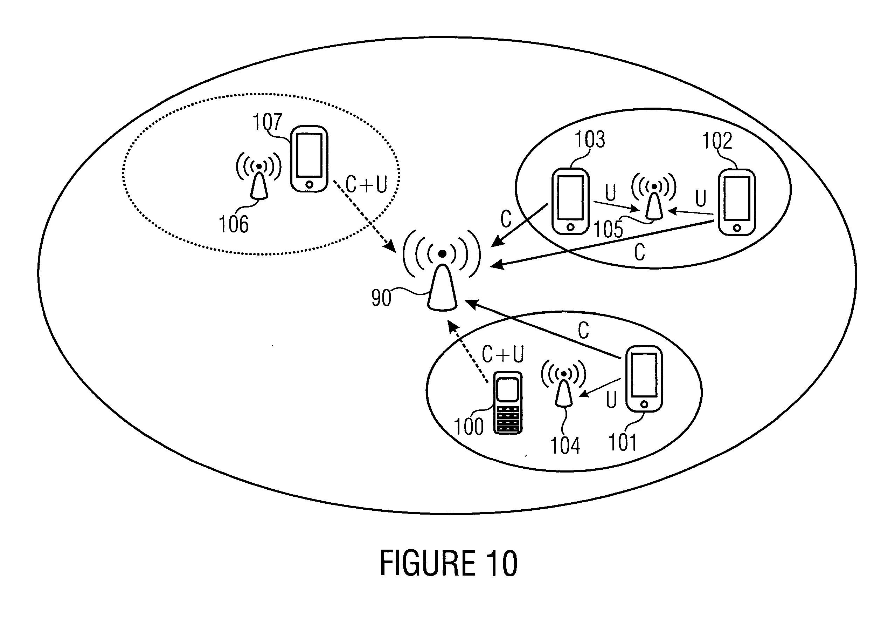

Fig. 10 illustrates functions of the detached cell concept. Newer mobile stations can either work in the detached cell mode when the U-plane base station or micro base station is on. Alternatively, mobile stations can operate in the legacy mode when a corresponding base station is not on. Legacy mobile stations only work in the legacy mode even when the micro base station is on, but advanced mobile stations being in the position to operate in both modes can select between those modes.

Therefore, Fig. 10 illustrates a legacy mobile station 100 operating in the legacy mode, i.e., directly connecting with the macro base station 90, while mobile stations 101, 102, 103 are advanced mobile stations communicating with micro base stations 104, 105 respectively.

Furthermore, Fig. 10 illustrates a situation, in which micro base station 106 is in the sleep mode and, therefore, mobile station 107 directly communicates with the macro base station 90. Irrespective of whether mobile station 107 is a legacy mobile station or an advanced mobile station, mobile station 107 can only communicate with the macro base station 90 as long as the micro base station 106 is in the sleep mode when, however, the macro base station 90 puts the micro base station 106 into the wake-up or active mode, then the mobile station 107 can communicate with the micro base station 106, provided that the mobile station 107 is an advanced mobile station.

Therefore, in the legacy mode, the Umbrella Network takes care of the transmission of both C-plane and U-plane signals either to support legacy mobile stations or to support a low number of advanced mobile stations with low data rate requirements or with a very high mobility. The DCN is not used in this mode.

However, when the DC mode is used, the Umbrella Network is responsible for C-plane communication only and the DCN is responsible for the U-plane communication. The U-plane base stations are switched on only when necessary and the legacy mobile stations do not support this mode and, therefore, connect to the network only via the legacy mode, i.e., via a macro base station.

In this context, it is to be noted that the present invention is not limited to the actual implementation of an Umbrella Network and Detached Cell Network, where the Umbrella Network is for transmitting control signals while the Detached Cell Network is for transmitting of user data as illustrated in Fig. 10 at "C" and "U". Instead, the present invention is also applicable for similar concepts, in which all data between a base station and a mobile station are transmitted from the micro base station when the mobile station is served by a micro base station or all data is transmitted between the mobile station and the macro base station, then the mobile station is actually served by the corresponding macro base station. Therefore, the two-fold networks illustrated in Fig. 10 are not necessary for implementing the present invention, but this architecture is a preferred application of the invention.

A goal of the embodiments is to save the maximum amount of energy. However, it is not easy to properly quantify this amount at this stage of development. In this section, it is attempted to give an estimation of the percentage of energy that is consumed by a base station in SLEEP state, as opposed to a base station in ON state.

For reference, it is assumed that:

- A base station in the ON state consumes 100% of energy
- A base station in the SLEEP state consumes x < 100% of energy
- A base station completely turned off consumes 0% of energy

The objective here is to quantify x. The main criterion is that U-plane BSs should transit from SLEEP mode to ON mode almost instantaneously (in ca. 1 msec), so that the U-plane base station connection algorithm can be applied to the system.

This almost instantaneous sleep feature has been introduced in various systems by the implementation of "micro sleep" modes. For example, Frenger et al. [3] introduce a "Micro DTX" scheme, which can enable a base station to wake up in about 30μs. In this scheme, only the Power Amplifier (PA) of the base station is assumed to be deactivated, i.e. working at its lowest working point.

Research resulting from the EARTH project has been able to determine that for small cells (picocells/femtocells), approximately 30% of energy savings can be obtained by only deactivating the PA [6], which would results in an energy consumption rate of about 70% in SLEEP mode.

Frenger et al. [3] also mention that it is possible to keep a base station in deep sleep and to wake it up in 10-20 sec or more, whereby its consumption is close to 0W, by turning off additional elements, such as Radio Frequency (RF) or Base Band (BB) processing components. Unfortunately, these times are not preferred for the algorithm, which preferably requires really short wake-up times.

However, given the current focus on base station micro sleep modes by base station manufacturers, some progress can be expected concerning base station turn-on times from sleep modes in the years to come.

Turning off a base station completely is also a possibility, but then turning it on again would take quite a long time (5 to 30 min, depending on the base station type). The bottleneck components, i.e. the base station components which take time to switch on, can be identified as follows:

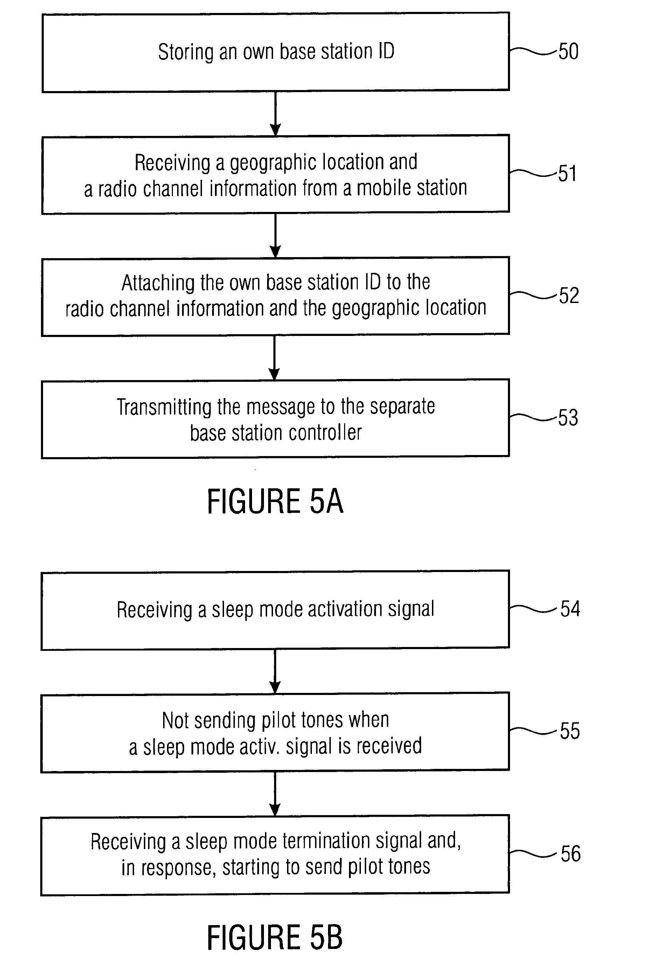

- The cooling system, since it needs to stabilize the temperature of the mobile station. However, smaller cells usually do not have a cooling system, as it can be observed on Figure 5.
- DSP components, i.e. BB processing components, since they need a certain time to boot up, just like any other computer.

In view of the above, a micro base station is in the ON state when it is fully on and when the micro base station sends both user data to connected mobile stations as well as pilot symbols to enable new mobile stations to connect.

A micro base station is in the sleep state when it is in a kind of a stand-by mode where it can neither send nor receive any signals. The general assumption in the sleep state is to deactivate the power amplifier (PA), but parts of the base station RF/BB components can also be turned off to further reduce the consumed power, The major difference from a complete "OFF" state, where base stations are entirely shut down is that the micro base stations can be woken-up by the macro base station almost instantly through the backhaul link, i.e., in less than 0.5 seconds and even preferably in less than 10 ms or even about 1 ms.

The database stored in a C-plane base station contains information on all U-plane BSs which are under the jurisdiction of this C-plane base station, i.e. all U-plane BSs connected to this C-plane base station by backhaul. This database is divided into partitions, where each partition corresponds to one U-plane base station.

For each U-plane base station, one stores the following contents in the database:

- The instantaneous traffic load of the U-plane base station. This is represented by the number of remaining Physical Resource Blocks (PRBs) by the U-plane base station. This value is updated as regularly as possible (fed back to the C-plane base station via the backhaul link) so as to keep an as actual value as possible, and is used for load balancing features.

- The geographic location information, obtain for example through Assisted-GPS, reported from the MSs.

- Some information regarding the SINR information, which can be represented by downlink RSRP (reference signal received power) or RSRQ (reference signal received quality) values, for each corresponding set of reported geographical location coordinates RSSI (received signal strength indicator) values can also be used for the radio channel information..

The SINR information is constantly updated at each new measurement. This is performed by an Exponential Moving Average (EMA) calculation. This operation enables to smoothen the signal so as to compensate for erroneous measurements as well as rapid channel fluctuations.

Mapping geographical location coordinates with SINR values enables MSs to obtain information about the channel quality between a mobile station and a U-plane base station at any position, even when the U-plane base station is not sending pilot symbols.

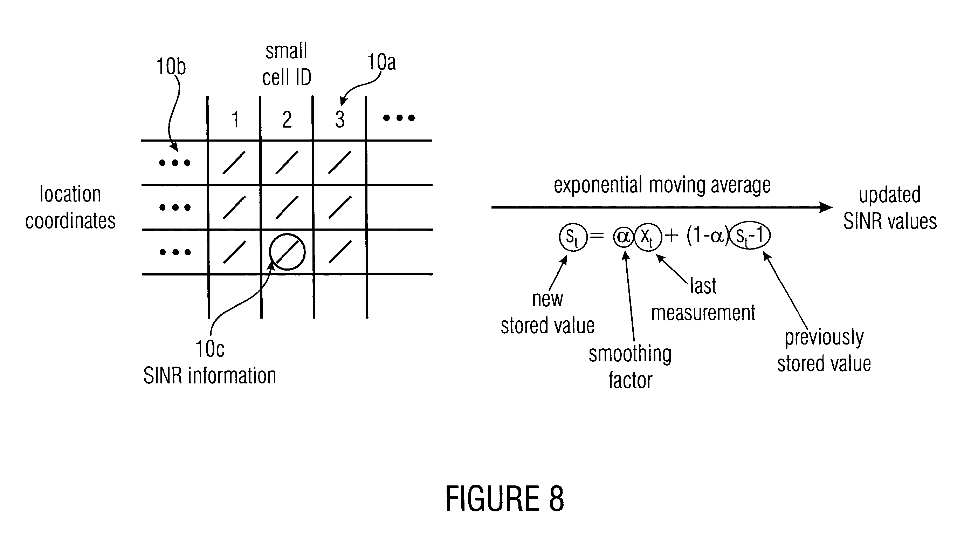

Fig. 8 illustrates the database in an embodiment, where the location coordinates 10b are illustrated. Furthermore, the base station identifications 10 are indicated as 1, 2, 3, ... and the channel information exemplarily indicated as SINR (signal interference noise ratio) information is illustrated at 10c.

Hence, the mobile station's feedback channel information and geographic location to the micro base station that serves the mobile station under consideration and the micro base station then provides this information together with its own ID via the backhaul link 97 (see Fig. 9) to the apparatus for controlling a plurality of micro base station which is preferably located within the macro base station 90 which additionally maintains the database illustrated in Fig. 8, left portion.

Preferably, a certain location coordinate quantization is applied. Typically, the geographic location reported by the mobile station will not be coincidental with the quantized location coordinates. Therefore, the database updater 17 illustrated in Fig. 1 is configured to find the correct quantization interval for the database such as by rounding the location coordinates in accordance with a certain rounding rule. Then, the database updater 17 either sets up a new column with a new base station ID, when the new base station has not had an entry in the database. When, however, the base station has a certain entry in the database, an updating procedure illustrated in Fig. 8 to the right-hand side is performed, where a new channel information value is calculated by performing a weighted addition of the previously stored value and the current measurement, where the weighting is determined by the smoothing factor $\alpha$, which is preferably lower than 0.95 and, in further embodiments, alternatively or additionally greater than 0.3.

In addition to the storage of the SINR information, the location coordinates and the micro base station ID, it is preferred that, additionally, the current average traffic load of the micro base stations is stored as well. This value can be represented by the number of remaining (i.e., not used by the micro base station under consideration) physical resource blocks (PRBs) for the micro base station and this value can be updated regularly, i.e., each time a mobile station connects to or disconnects from this micro base station. However, this value has been proved to be useful with a certain connection/disconnection or sleep/wake-up procedures described later.

As mentioned earlier, BSs in sleep mode are subject to a discovery issue. It is therefore necessary for the database to be mature enough so that BSs can remain discoverable even in SLEEP mode.

In order for the database to be mature enough, it should go through a learning process. This learning process corresponds to possessing a sufficient history of SINR measurements in the database for a large number of location coordinates within the coverage area of the U-plane base station.

As long as this learning process has not been completed for a U-plane base station, it permanently remains in the ON state, so as to be sure that the U-plane base station stays discoverable.

When the database values are mature enough, the C-plane base station allows the U-plane base station to go to SLEEP automatically as soon as the last connected mobile station leaves the cell.

Reporting the geographical location information to the C-plane base station is an operation that costs energy to a mobile station and induces some additional signaling overhead. Therefore, it is preferred to limit the situations in which these signals are sent:

- When connected in legacy mode, a mobile station sends regular updates of its geographical location information to the C-plane base station. This allows not only to make the mobile station connect to the DCN as soon as possible, but also to measure the mobile station's mobility status to know if it needs to remain in legacy mode or not.

- When connected in DC mode, a mobile station sends updates of its geographical location information to the C-plane base station only when the received signal quality is not sufficiently good. The location information updates are then used to help the U-plane base station to U-plane base station (U-to-U) handover procedure.

In order to enable a mobile station to connect to the most appropriate U-plane base station, a particular algorithm is necessary. This algorithm prioritizes connection of MSs to already-ON U-plane BSs, while enabling them to connect to U-plane BSs in SLEEP mode if necessary.

The connection of a mobile station to a U-plane base station can happen in various cases, such as:

- When the PRB usage of a C-plane base station reaches a certain threshold, the C-plane base station needs to unload its traffic by ordering some MSs connected in legacy mode to switch their operation mode to DC mode.

- When the measured channel quality (SINR) on a currently used U-plane base station is starting to degrade, a U-plane base station to U-plane base station (U-to-U) handover procedure needs to be started.

The U-plane base station connection algorithm is structured as follows:

- In the first step, a mobile station will try to connect to already ON U-plane BSs by listening to pilot symbols (70).

- If at least one U-plane base station can serve the mobile station (71), a standard initial connection procedure/component carrier configuration procedure is initialized (72).

    o No additional U-plane base station is woken up in this case

- If no currently active U-plane base station can serve the mobile station (71), the mobile station will report to the C-plane base station by sending a no success message (73).

- Given the geographical location information obtained from the regular updates, the C-plane base station turns on the most appropriate U-plane base station with the help of the data contained in the database, and informs the mobile station of the cell ID of this U-plane base station (74).

- The newly turned on U-plane base station sends, in turn, pilot symbols, which are received by the mobile station (75). If the mobile station measures a proper channel, an initial connection procedure/component carrier configuration procedure can start (77).

- If the newly measured channel is not good enough (78):

    o The mobile station tries to connect to another U-plane base station by resending a no success message (73)to the C-plane base station.
    o If the mobile station is still not connected to the DCN after a certain number of attempts (e.g. 3-4 times), it falls back to legacy mode (79).

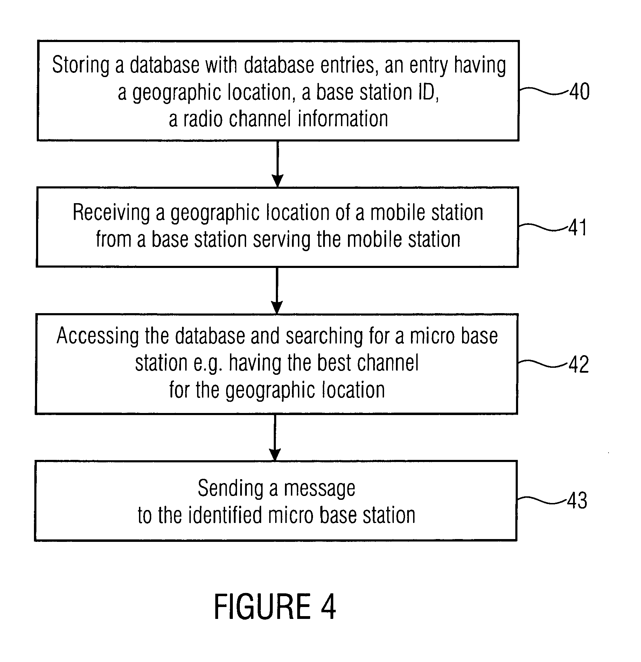

Fig. 4 illustrates the preferred implementation of the method for controlling a plurality of micro base stations. In step 40, the database with database entries is stored, where an entry comprises a geographic location 10b, a base station ID 10a and a radio channel information 10c. In step 41, a geographic location of a mobile station is received either from the mobile station directly or from the micro base station transmitting this information to the competent macro base station. In step 42, the database is accessed and a micro base station is searched having the best channel for the geographic location received in step 41. Then, in step 43, a message is sent out to the identified micro base station, so that this identified micro base station turns back from this sleep state into the active or wake-up state.

Figs. 5a and 5b illustrate a procedure of a base station and, particularly, a procedure operating a base station in accordance with an embodiment of the invention.

In step 50, the base station and, particularly, the base station processor 23 of Fig. 2 stores its own base station ID 20.

In step 51, the base station receives a geographic location and a radio channel information as a feedback information from a mobile station. Then, in step 52, the base station attaches its own base station ID to the transmission received in step 51, i.e., to the radio channel information and geographic location. Then, in step 53, the base station transmits this message including the own base station ID to the separate base station controller preferably via the backhaul network between the micro base station and the macro base station.

Then, illustrated in Fig. 54, the base station is furthermore configured for receiving a sleep mode activation signal. In response to the sleep mode activation signal, the base station does not send out any pilot tones when the sleep mode activation signal is received as illustrated in step 55. When, however, the base station receives a sleep mode termination signal as, for example, output by the micro base station controller 12 via output 16 in Fig. 1, then the base station starts to send pilot tones in response to the received sleep mode termination signal as illustrated in step 56.

In order to determine which cell is the best to serve a user, the following Soft Decision (SD) Metric may be used. The objective is to find a cell which offers the best compromise between channel quality and traffic load. It is expressed the following way:

$$(SINR)^{\alpha_1} \times (remainingPRBS)^{\alpha_2}$$

where $\alpha_1$ and $\alpha_2$ are variable weighting factors that can be adjusted, i.e. through simulations, and remainingPRBS are the physical resource blocks currently not used by a micro base station, where a physical resource block may comprise a code slot, a time slot, a frequency slot or a time/frequency slot, i.e., any resource block that can be assigned to a user in any kind of modulation format.

In order to get the most of the C/U-plane separated architecture, legacy mode traffic from the UNW is redirected to the DCN as efficiently as possible, only using U-plane BSs already turned ON, so as not to wastefully increase the energy consumption of the network. This process is called the Light Load Balancing Algorithm:

- A mobile station connected in legacy mode to the C-plane base station will regularly listen to pilot symbols send by U-plane BSs and measure the corresponding SINR (110). Pilot symbols are sent by U-plane BSs which are:

    o Either already serving other users
    o Or new to the network, i.e. for which the database values are not mature enough

- Optionally, the SINR measurements can be fed back (111) to the C-plane BSs when sending the geographical location information update so as to update the database values, thereby accelerating the SLEEP mode learning process. This process needs to be considered carefully, since it can introduce important signaling overhead.

- For all U-plane BSs for which the measured SINR is above a certain threshold, as well as for the C-plane base station, the previously defined SD Metric is computed (112):

    o If the highest SD Metric is found to be the C-plane base station's, the mobile station remains in legacy mode (113).

    o If the highest SD Metric is found to be a U-plane base station's, then the mobile station connects to this U-plane base station by starting a standard initial connection procedure/component carrier configuration procedure (114).

In other words, embodiments of the present invention relate to an implementation of a system comprised of a central node and access nodes, where a user terminal connects to an access node in order to transmit/receive data under the control of the central node using information stored in a database at the central node and the reported geographic location of the user terminal.

The information stored in this database includes the received signal power/received signal quality for each segmented geographic location as well as the physical resource utilization ratio of all access nodes under the control of the central node.

Preferably, the received signal power/received signal quality as well as the geographic location information are reported values fed back from user terminals or mobile stations.

Furthermore, the received signal power/received signal quality for each geographic location are updated with an averaging method for each reporting from a user terminal or mobile station.

Furthermore, when an access node is not connected to a user terminal, it is preferred that the central node manages the access node to turn into a sleep mode by switching off parts of the radio frequency component and/or baseband components of the access node.

In an embodiment, when the number of averaged samples from the received signal power station received signal qualities is not sufficient for each geographic location in the vicinity of the access node, the access node is permanently on and the central node does not monitor the sleep mode of the access node. In a further embodiment, when the user terminal connects to access nodes, the number of access nodes remaining in sleep mode is maximized, by keeping the required user throughput of all user terminals. In a further embodiment, when the velocity of a user terminal which is estimated at the central node, is higher than a threshold, this central node manages to use a terminal entirely without making it connect to an access node.

References

[1] EARTH Project Deliverable D3.3 https://bscw.ict-earth.eu/pub/bscw.cgi/d70472/EARTH_WP3_D3.3.pdf, retrieved 2012-09-03

[2] NOKIA SIEMENS NETWORKS OY, "BASE STATION WAKE UP CONTROL", International Patent WO/2012/110075, published 2012-08-23

[3] Frenger, P.; Moberg, P.; Malmodin, J.; Jading, Y.; Godor, I.; , "Reducing Energy Consumption in LTE with Cell DTX," Vehicular Technology Conference (VTC Spring), 2011 IEEE 73rd , vol., no., pp.1-5, 15-18 May 2011

[4] Conte, A.; Feki, A.; Chiaraviglio, L.; Ciullo, D.; Meo, M.; Marsan, M.A.; , "Cell wilting and blossoming for energy efficiency," Wireless Communications, IEEE , vol.18, no.5, pp.50-57, October 2011

[5] Tamal Adhikary, Amit Kumar Das, Md. Abdur Razzaque, Md. Obaidur Rahman, Choong Seon Hong, "A distributed wake-up scheduling algorithm for base stations in green cellular networks", 6th International Conference on Ubiquitous Information Management and Communication (ICUIMC '12). ACM, New York, NY, USA, Article 120, 7 pages.

[6] EARTH Project Deliverable D4.3 https://bscw.ict-earth.eu/pub/bscw.cgi/d70472/EARTH_WP4_D4.3.pdf, retrieved 2012-09-03

**Claims**

1. Apparatus for controlling a plurality of micro base stations each having a micro base station radio coverage area in a heterogeneous network comprising a macro base station having a macro base station radio coverage area covering at least two micro base station radio coverage areas, comprising:

a database (10) for storing, for each micro base station, a plurality of geographic locations and associated therewith radio channel information entries for a radio channel from the corresponding geographic location to the corresponding micro base station; and
a micro base station controller (12) for receiving a geographic location of a mobile station, for accessing the database, for identifying a micro base station having a radio channel allowing a communication between the identified micro base station and the mobile station based on the radio channel information for the received geographic location, and for sending a message to the identified micro base station instructing the identified micro base station to be ready for serving the mobile station.

2. Apparatus in accordance with claim 1, further comprising an input interface (19) for receiving, from each of the plurality of micro base stations, a traffic load information, or
for receiving, from a mobile station, a micro base station identification of the micro base station currently communicating with the mobile station, and radio channel information between the mobile station and the micro base station in association with geographic information relating to a location of the mobile station,
wherein the apparatus further comprises a database updater (17) for newly introducing the micro base station identification, the radio channel information and the geographic position into the database, or for updating a stored radio channel information in the database provided that the database already has stored radio channel information for the geographic position and the micro base station identification.

3. Apparatus in accordance with claim 1 or 2, wherein a micro base station of the heterogeneous network is in a sleep state, and
wherein the micro base station controller (12) is configured for sending the message to instruct the micro base station to change from the sleep state into a wake-up state.

4. Apparatus in accordance with one of the preceding claims, wherein the micro base station controller (12) is configured to detect whether any mobile station is currently in the macro base station radio coverage area, and to instruct at least one of the micro base stations to go into a sleep mode, when there does not exist any mobile station in the macro base station radio coverage area.

5. Apparatus in accordance with one of the preceding claims,
wherein the micro base station controller (12) is configured to store a sleep record (13) of micro base stations being in a sleep mode, and
wherein the micro base station controller is configured to only send the message to a micro base station in the sleep mode as determined by the sleep record, when a resource block usage of the macro base station reaches a usage threshold, or when a measured channel quality of a currently active micro base station starts to degrade by a predefined amount, or when the micro base station controller receives a message from a mobile station indicating that the mobile station was not successful in connecting to a micro base station.

6. Apparatus in accordance with one of the preceding claims,
wherein the micro base station controller (12) is configured to determine whether a micro base station is to be activated, based on a load balancing algorithm using a metric, the metric being based on the radio channel information stored in the database for the micro base station under consideration and a number of currently unused resource blocks, and
wherein the micro base station controller (12) is configured to send the message to the micro base station in the sleep mode, when the micro base station in the sleep mode has a superior metric compared to metrics for already activated micro base stations or for the macro base station.

7. Apparatus in accordance with one of the preceding claims,
wherein the micro base station controller (12) is configured for detecting a newly installed micro base station in the macro base station radio coverage area, and
wherein the micro base station controller is configured for not instructing the newly installed micro base station to go into a sleep mode until a predetermined number of radio channel samples associated with geographic information from mobile stations communicating with the newly installed micro base station have been received by the apparatus for controlling a plurality of micro base stations.

8. Method of controlling a plurality of micro base stations each having a micro base station radio coverage area in a heterogeneous network comprising a macro base station having a macro base station radio coverage area covering at least two micro base station radio coverage areas, comprising:

storing (40), in a database and for each micro base station, a plurality of geographic locations and associated therewith radio channel information entries for a radio channel from the corresponding geographic location to the corresponding micro base station;
receiving (41) a geographic location of a mobile station;
accessing (42) the database;
identifying a micro base station having a radio channel allowing a communication between the identified micro base station and the mobile station based on the radio channel information for the received geographic location; and
sending (43) a message to the identified micro base station instructing the identified micro base station to be ready for serving the mobile station.

9. Base station, comprising:

a first communication interface (21) for communicating with a mobile station;
a second communication interface (22) for communicating with a separate base station controller;
a base station processor (20) for transmitting, using the second communication interface, radio channel information items and associated geographic locations received from a mobile station communicating with the first communication interface to a separate base station mode controller, wherein the base station processor is configured to associate an own base station identification to the radio channel information items before transmitting the radio channel information items,
wherein the base station processor (20) is furthermore configured for receiving, using the second communication interface, a sleep mode activation instruction from the separate base station mode controller,
wherein the base station processor (20) is configured for not sending pilot tones via the communication interface, when the base station is in the sleep mode and for sending pilot tones via the first communication interface, when the base station is not in the sleep mode.

10. Base station in accordance with claim 9,
wherein the first communication interface (21) is a radio channel communication interface; and
wherein the second communication interface (22) is an interface to a backhaul connection to a macro base station.

11. Method of operating a base station comprising a first communication interface for communicating with a mobile station, a second communication interface for communicating with a separate base station controller, and a base station processor, comprising:

transmitting, (53) using the second communication interface, radio channel information items and associated geographic locations received from a mobile station communicating with the first communication interface to the separate base station controller;
associating (52) an own base station identification to the radio channel information items before transmitting the radio channel information items;
receiving, (54) via the first communication interface, a sleep mode activation instruction;
not sending pilot tones (55) via the second communication interface, when the base station is in the sleep mode; and
sending pilot tones (56) via the second communication interface, when the base station is not in the sleep mode.

12. Mobile station for communicating with a base station, comprising:

a radio channel estimator (31) for estimating a channel between the mobile station and a serving base station;
a geographic position determiner (32) for determining a current position of the mobile station; and
a feedback information transmitter for transmitting a feedback message to a base station, the feedback message having an information on the estimated channel and a geographic position as determined when estimating the channel by the radio channel estimator (36).

13. Mobile station of claim 12, further comprising:

a mobile station controller (37) configured for performing a detached cell mode activation procedure, comprising:

listening (63) to pilot tones of a micro base station;
when pilot tones of a micro base station are not heard, transmitting (64) a message to a macro base station indicating that a connection to a micro base station has failed;
subsequent to transmitting the message, again listening (66) to pilot tones of a further micro base station;
starting (67) an initial communication procedure with the further micro base station, if the mobile station can be served by the further micro base station; or
initiating (68) a connection to the macro base station, when a predetermined number of tries to connect to a further micro base station has failed.

14. Method of operating a mobile station for communicating with a base station, comprising:

estimating (69) a channel between the mobile station and the base station;
determining (61) a current position of the mobile station; and
transmitting (62) a feedback message to the base station, the feedback message having an information on the estimated channel and a geographic position as determined when estimating the channel.

15. Computer program for performing, when running on a computer or processor, the method of claim 8, 11, or 14.

FIGURE 1

from/to mobile station
send pilot tones when not in sleep mode
do not send pilot tones when in sleep mode

first communication
interface                        ~21

**Base Station**

channel info + geographic location

base station processor
20 ~   ~(base station ID)     ~23
has sleep mode control

channel info + geographic location +
base station ID

second
communication      ~22
interface

receive
sleep mode    from/to separate base station controller
activation    having the location database
24 ~

Sleep mode has less energy consumption than normal mode,
rapid wake-up time is preferred, not a full switch-off

# FIGURE 2

FIGURE 3

EP 2 731 383 A1

Storing a database with database entries, an entry having a geographic location, a base station ID, a radio channel information — 40

Receiving a geographic location of a mobile station from a base station serving the mobile station — 41

Accessing the database and searching for a micro base station e.g. having the best channel for the geographic location — 42

Sending a message to the identified micro base station — 43

## FIGURE 4

Storing an own base station ID —50

Receiving a geographic location and
a radio channel information from a mobile station —51

Attaching the own base station ID to the
radio channel information and the geographic location —52

Transmitting the message to the separate
base station controller —53

## FIGURE 5A

Receiving a sleep mode activation signal —54

Not sending pilot tones when
a sleep mode activ. signal is received —55

Receiving a sleep mode termination signal and,
in response, starting to send pilot tones —56

## FIGURE 5B

Estimating a radio channel to a micro base station
and determining a current geographic location
when estimating the radio channel — 61

Transmitting the combined information
to a geographic database directly or
via a micro/macro base station — 62

# FIGURE 6A

Listening to pilot tones of a
micro base station — 63

not heard | heard

Transmit failed message
to macro base station — 64

Connect to
micro base station

65

Again listening to pilot
tones of a further micro
base station — 66

68

heard | not heard

Starting an initial con-
nection procedure to the
further micro base station — 67

Connecting to the
macro bas station

# FIGURE 6B
## (DETACHED CALL MODE ACTIVATION PROCEDERE)

MS listens to U-plane
BSs pilot symbols — 70

Can at least
one U-plane BS
serve the MS? — 71

yes → Start innitial
connection procedure — 72

MS reports to C-plane BS
by sending a *no success* message — 73

C-plane BS turns on the most appropriate U-plane BS
based on the MSs reported geographical location
information and on the database values — 74

newly turned on U-plane BS
send out pilot symbols

MS receives pilot symbols
from U-plane BS — 75

Can newly
turned on U-plane BS
serve the MS? — 76

yes → Start innitial
connection procedure — 77

no

Has failed
to connect to U-plane BS
for 3-4 times? — 78

no

yes

Fallback to legacy mode — 79

FIGURE 7

10b

small
cell ID

10a

|  | 1 | 2 | 3 | • • • |
|---|---|---|---|---|
| • • • | / | / | / | |
| • • • | / | / | / | |
| • • • | / | ⊘ | / | |

location
coordinates

10c
SINR information

exponential moving average ⟶ updated
SINR values

$$s_t = \alpha \, x_t + (1-\alpha) \, s_t\text{-}1$$

new
stored value

smoothing
factor

last
measurement

previously
stored value

# FIGURE 8

Umbrella Network (UNW)

Detached Cell Network (DCN)

macro cell

always-on connectivity

C-plane

backhaul link

U-plane

smaller cell

90 91 92 93 94 95 96 97

FIGURE 9

FIGURE 10

Listening to pilot symbols from a micro base
station by a mobile station and
measuring the radio channel ⌇110

Feedbacking, by the mobile station,
the measurements to a connected macro base
station at a regular update interval ⌇111

Determining, in the mobile station, a decision
metric for the macro base station and the micro
base station, when the measurement (e.g. SINR)
is above a predefined threshold ⌇112

Staying connected to
macro base station
when macro base station
has highest measurement ⌇113

Changing to
micro base station,
when micro base station
has highest measurement ⌇114

Light Load Balancing with a (soft) decision metric

FIGURE 11

Determining, in the macro base station, that Physical Resource Block (PRB) usage is above a predefiened threshold ⟩~120

Instructing, by the macro base station, the mobile station to connect to an already-on micro base station ⟩~121

Calculating, by the mobile station, a soft decision metric for the macro base station and the detected micro base staion ⟩~122

Connecting to a possible micro base station or reporting to the macro base station that there was no success in detaching from the macro base station ⟩~123

Waking up, by the micro base station controller, the most appropriate micro base station from the sleep state using the geographical database, e.g. as in FIGURE 7 ⟩~124

Forced DC Mode Activation

FIGURE 12

Determining, by a mobil station,
that a hand-over from a micro base station
to another micro base station would be favorable
(SINR degrades until a certain predifiened threshold) — 130

Listening, by the mobile station,
to pilot tones of other micro base stations — 131

Computing, by the mobile station, a (soft) decision metric
for all micro base station candidates in question — 132

Connecting, by the mobile station,
to the best candidate — 133

When connection is not possible, sending, by the mobile
station, a geographical update and a no success message — 134

Determining, by the micro base station controller, the best
suitable sleeping micro base station and sending a
wake-up message to this micro base station — 135

Connecting, by the mobile station, to the newly activated
micro base station or, if not possible, falling back to a
macro base station connection — 132

U-to-U Handover Procedure

FIGURE 13

Europäisches
Patentamt

European
Patent Office

Office européen
des brevets

# EUROPEAN SEARCH REPORT

Application Number

EP 12 19 1577

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 835 774 A1 (SIEMENS AG [DE]) 19 September 2007 (2007-09-19) | 12,14,15 | INV. H04W52/02 |
| A | * paragraph [0047] - paragraph [0054] * | 1-11 | ADD. H04W84/04 |
| X | US 2011/201347 A1 (ABRAHAM CHARLES [US] ET AL) 18 August 2011 (2011-08-18) * paragraph [0041] * * paragraph [0052] * | 12,14,15 | |
| A | US 2012/135753 A1 (WANG HONG [CN] ET AL) 31 May 2012 (2012-05-31) * paragraph [0036] * * paragraph [0045] - paragraph [0046] * * paragraph [0052] - paragraph [0058] * * paragraph [0078] - paragraph [0085] * | 1-11,15 | |
| A | US 2010/056184 A1 (VAKIL FARAMAK [US] ET AL) 4 March 2010 (2010-03-04) * paragraph [0011] * * paragraph [0028] - paragraph [0062] * | 1-11,15 | |
| A | WO 2011/101998 A1 (ERICSSON TELEFON AB L M [SE]; MATSUMURA TAKESHI [JP]; MURAI HIDESHI [J) 25 August 2011 (2011-08-25) * paragraph [0054] - paragraph [0065] * | 1-11,15 | TECHNICAL FIELDS SEARCHED (IPC) H04W |
| A | MITSUBISHI ELECTRIC: "Dynamic Setup of HNBs for Energy Savings and Interference Reduction", 3GPP DRAFT; R3-081949 (DYNAMIC SETUP HNBS), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Jeju Island; 20080813, 13 August 2008 (2008-08-13), XP050165010, [retrieved on 2008-08-13] * the whole document * | 1-11,15 | |

The present search report has been drawn up for all claims

| Place of search | Date of completion of the search | Examiner |
|---|---|---|
| Munich | 28 June 2013 | Hartweg, Norman |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 731 383 A1

Europäisches Patentamt
European Patent Office
Office européen des brevets

Application Number

EP 12 19 1577

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

29

Europäisches
Patentamt

European
Patent Office

Office européen
des brevets

**LACK OF UNITY OF INVENTION
SHEET B**

Application Number

EP 12 19 1577

The Search Division considers that the present European patent application does not comply with the requirements of unity of invention and relates to several inventions or groups of inventions, namely:

1. claims: 1-11, 15

   Associate radio channel information and geographic location for particular (micro) base stations, and controlling the activation state of the (micro) base stations based on said association.
   ---

2. claims: 12-14

   Transmit channel estimation information and geographic position from a mobile station to a base station. Furthermore, notifying a macro base station about a failure to hear pilot tones of a micro base station.
   ---

## ANNEX TO THE EUROPEAN SEARCH REPORT
## ON EUROPEAN PATENT APPLICATION NO.

EP 12 19 1577

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2013

| Patent document cited in search report | | | Publication date | Patent family member(s) | | | Publication date |
|---|---|---|---|---|---|---|---|
| EP 1835774 | A1 | | 19-09-2007 | NONE | | | |
| US 2011201347 | A1 | | 18-08-2011 | CN | 102164339 | A | 24-08-2011 |
| | | | | EP | 2360973 | A2 | 24-08-2011 |
| | | | | TW | 201204112 | A | 16-01-2012 |
| | | | | US | 2011201347 | A1 | 18-08-2011 |
| US 2012135753 | A1 | | 31-05-2012 | CN | 102480757 | A | 30-05-2012 |
| | | | | US | 2012135753 | A1 | 31-05-2012 |
| | | | | WO | 2012070909 | A2 | 31-05-2012 |
| US 2010056184 | A1 | | 04-03-2010 | CN | 102132600 | A | 20-07-2011 |
| | | | | EP | 2319261 | A1 | 11-05-2011 |
| | | | | KR | 20110050479 | A | 13-05-2011 |
| | | | | RU | 2011111438 | A | 10-10-2012 |
| | | | | US | 2010056184 | A1 | 04-03-2010 |
| | | | | WO | 2010027569 | A1 | 11-03-2010 |
| WO 2011101998 | A1 | | 25-08-2011 | EP | 2537374 | A1 | 26-12-2012 |
| | | | | JP | 2013520032 | A | 30-05-2013 |
| | | | | US | 2012289178 | A1 | 15-11-2012 |
| | | | | WO | 2011101998 | A1 | 25-08-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2432284 A1
- EP 2056628 A1
- EP 2141947 A1
- US 20120100881 A1
- WO 2012110075 A

### Non-patent literature cited in the description

- *The European Project EARTH introduces the concept of C/U-plane separation,* July 2012
- **VEREECKEN et al.** Evaluation of the potential for energy saving in macrocell and femtocell networks using a heuristic introducing sleep modes in base stations. *EURASIP Journal on Wireless Communications and Networking,* 2012, 170
- Reducing Energy Consumption in LTE with Cell DTX. **FRENGER, P. ; MOBERG, P. ; MALMODIN, J. ; JADING, Y. ; GODOR, I.** Vehicular Technology Conference. VTC Spring, May 2011, 1-515-18
- **CONTE, A. ; FEKI, A. ; CHIARAVIGLIO, L. ; CIULLO, D. ; MEO, M. ; MARSAN, M.A.** Cell wilting and blossoming for energy efficiency. *Wireless Communications,* October 2011, vol. 18 (5), 50-57
- A distributed wake-up scheduling algorithm for base stations in green cellular networks. **TAMAL ADHIKARY ; AMIT KUMAR DAS ; MD. ABDUR RAZZAQUE ; MD. OBAIDUR RAHMAN ; CHOONG SEON HONG.** 6th International Conference on Ubiquitous Information Management and Communication. ACM, 7